Europäisches Patentamt

**European Patent Office**

Office européen des brevets

(19)

(11) Publication number: **0 032 198**

**A1**

# EUROPEAN PATENT APPLICATION

(12)

(21) Application number: 80107654.8

(22) Date of filing: 05.12.80

(51) Int. Cl.³: **B 60 R 9/04**

(30) Priority: 19.12.79 IT 5381979

(43) Date of publication of application:
22.07.81 Bulletin 81/29

(84) Designated Contracting States:
AT BE CH DE FR GB LI NL SE

(71) Applicant: La PREALPINA S.A.S. di Destefanis Maria &
C.
Strada Orbassano, 47
I-10040 Volvera Province of Torino(IT)

(72) Inventor: Taschero, Mario
Strada Orbassano, 49
I-10040 Volvera (Province of Torino)(IT)

(74) Representative: Modiano, Guido et al,
MODIANO & ASSOCIATI S.A.S. Via Meravigli, 16
I-20123 Milan(IT)

(54) Cartop carrier connector for flush-mounted door cars, in particular cars of the Mitsubishi "Colt" model.

(57) The connector comprises an upright (20) with a channel foot (200), a body (201) and adjoining area (202) between the foot (200) and body (201) which is flattened to fit through the gap (14) between the door (11) and roof (10) of the car, the foot (200) being adapted for engaging the side gutter (13) and locked by pressure screws (31) carried in a bracket (30) which embraces said gutter (13).

Fig. 1

EP 0 032 198 A1

This invention relates to a cartop carrier connector for cars having flush mounted doors, that is doors having upper cappings which are set flush with the car body top, said cappings defining a bay which encloses and conceals the side gutter; flush mounted doors of the general type outlined above being installed, in particular, on the Mitsubishi "Colt" Model cars.

The invention is essentially directed to providing a connector which enables the cartop carrier to rest onto the side gutter, while allowing proper closing -- without interference -- of such a flush-mounted door.

Within the above general aim, it is possible to arrange that the connector of this invention is constructed to ensure a firm retention of the cartop carrier, notwithstanding the small room available to accommodate the carrier securing means.

According to one aspect of the present invention, there is provided a cartop carrier connector for flush-mounted door cars, in particular cars of the type of the "Colt" model by Mitsubishi, characterized in that it comprises a plurality of uprights, each upright having a channel-like widened foot intended for engaging the gutter, an upright body having a C-like sectional profile, and an adjoining area between said foot and body which is flattened to fit through the gap between the car roof and door, the channel-like foot being held against the gutter by pressure screws carried in a bracket arranged to embrace the gutter externally thereto.

Further features and advantages will be more clearly apparent from the detailed description which follows, with reference to the accompanying drawings, where:

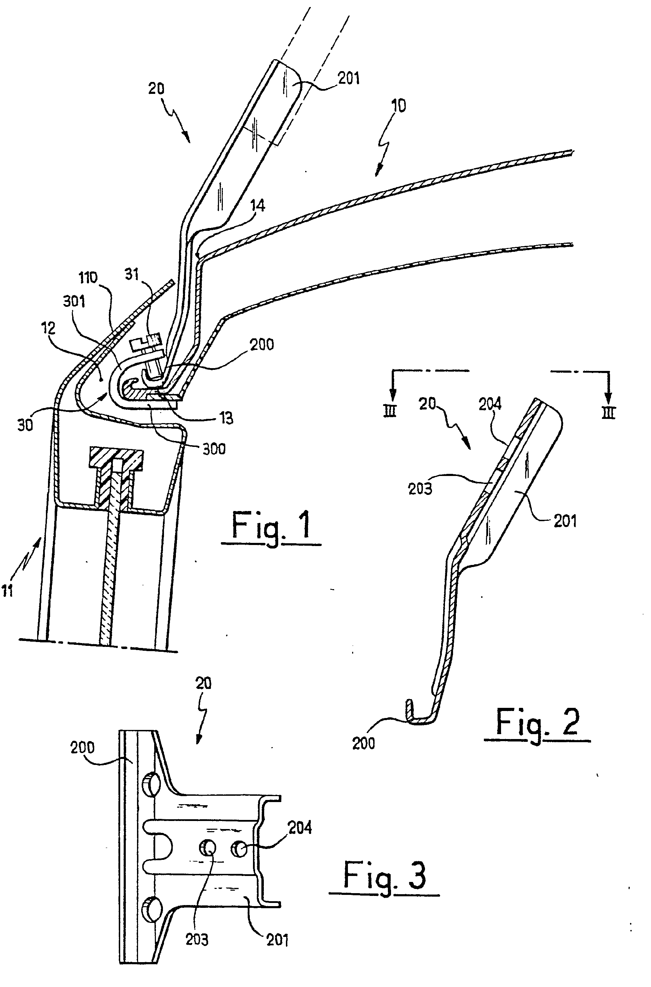

Figure 1 is a schematical cross-section of a car having flush-mounted doors as indicated, showing a connector according to the invention in its position of installation on said car;

Figure 2 is a longitudinal section of the connector upright; and

Figure 3 is a top plan view of said upright.

In the drawings, the reference numeral 10 designates the car body top or roof of a car having side doors 11 of the flush-mounted or "wrap-around" type, specifically of a Mitsubishi motor car of the "Colt" model type.

As it may be seen, the flush-mounted door 11 has an upper capping or molding 110 which is set flush with the roof and defines a bay 12 wherein the gutter 13 is accommodated which extends laterally along the roof base; between the capping 110 and roof 10 there is left a gap 14 of small width. The numeral 20 designates generally the connector for the cartop carrier. According to the invention, it comprises a plurality of uprights each having a widened foot 200 with a channel-like sectional profile and intended to engage in the gutter 13, a C-like contoured body 201, and an area 202 adjoining said foot and body and being suitably flattened to pass without interference through the gap 14; the area 202 being provided with longitudinal stiffening ribs 203. With the foot 200 of each connector 20, there cooperates a bracket 30 of U-like configuration, the lower or bottom portion 300 whereof engages the gutter 13 from below and embraces it toward the top. The upper portion 301 of the bracket has a pair of threaded holes accommodating corresponding pressure screws 31 which react against the channel foot to urge it in forced contact engagement with the gutter 13. Advantageously, between the bracket 30 and gutter, there is interposed a lining 40 of an elastomer material.

The body 201 of each upright 20 is adapted for receiving, in sliding relationship and in an adjustable manner, the supporting leg (not shown) incorporated to the cartop carrier, and is provided with two or more frontally located holes 203-204 for the passage of bolts therethrough which are effective to lock the upright and supporting leg in a selected adjustment position.

CLAIMS

1. A cartop carrier connector for flush-mounted door cars, in particular cars of the Mitsubishi "Colt" model, characterized in that it comprises a plurality of uprights (20), each upright (20) having a channel-like widened foot (200) intended for engaging the gutter (13), an upright body (201) having a C-like sectional profile, and an adjoining area (202) between said foot (200) and body (201) which is flattened to fit through the gap (14) between the car roof (10) and door (11), the channel-like foot (200) being held against the gutter (13) by pressure screws (31) carried in a bracket (30) arranged to embrace the gutter (13) externally thereto.

2. A connector according to Claim 1, wherein said flattened adjoining area (202) includes longitudinal stiffening ribs (203).

3. A connector according to Claims 1 and 2, wherein the upright body (201) is adapted for receiving in sliding relationship and in an adjustable manner the supporting leg incorporated to the cartop carrier, and has one or more frontally located holes (203, 204) for the passage of bolts therethrough adapted for locking the upright (20) and supporting leg in a selected adjustment position.

4. A connector according to the preceding claims, wherein said bracket (30) is of U-like configuration and comprises a lower portion (300) engaging the gutter (13) from below and an upper portion (301) provided with threaded holes for said pressure screws (31).

_Fig. 1_

_Fig. 2_

_Fig. 3_

## DOCUMENTS CONSIDERED TO BE RELEVANT

| Category | Citation of document with indication, where appropriate, of relevant passages | Relevant to claim |
|---|---|---|
| A | FR - A - 1 189 801 (DUPIN)<br><br>* the whole document * | 1 |
| A | FR - A - 1 549 522 (SUERE)<br><br>* the whole document * | 1 |

CLASSIFICATION OF THE APPLICATION (Int. Cl.³)

B 60 R 9/04

TECHNICAL FIELDS SEARCHED (Int. Cl.³)

B 60 R

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27.03.1981 | SCHMITTER |

EPO Form 1503.1 06.78